**Europäisches Patentamt**

(19) **European Patent Office**

**Office européen des brevets**

(11) Publication number: **0 071 192**
**A1**

(12) # EUROPEAN PATENT APPLICATION

(21) Application number: **82106619.8**

(22) Date of filing: **22.07.82**

(51) Int. Cl.³: **H 04 L 5/14**
**H 04 B 3/23**

(30) Priority: **23.07.81 IT 6802381**

(43) Date of publication of application:
**09.02.83 Bulletin 83/6**

(84) Designated Contracting States:
**CH DE FR GB LI NL SE**

(71) Applicant: **CSELT Centro Studi e Laboratori Telecomunicazioni S.p.A.**
**Via Guglielmo Reiss Romoli, 274**
**I-10148 Turin(IT)**

(72) Inventor: **Panarotto, Gianfranco**
**Via Paruzzaro 1**
**Turin(IT)**

(72) Inventor: **Tofanelli, Adler**
**Via Magneta 20**
**Collegno (TO)(IT)**

(72) Inventor: **Varetto, Luigi**
**Via Lunga 10**
**San Mauro Torinese (TO)(IT)**

(74) Representative: **Riederer Freiherr von Paar zu Schönau, Anton et al,**
**Müllerstrasse 31**
**D-8000 München 5(DE)**

(54) **System for baseband digital transmission in both directions on a two-wire line.**

(57) The system is to be applied to a subscriber line. It allows the cancellation of the echo, due to the signal transmitted by a data terminal, from the signal received by the terminal itself, so that the information and the timing signals might be recovered. A fixed line equalization, designed for a mean trunk length, and a circuit which cancels the noise by a correlation between the received and transmitted signal are used. The statistical independence between the digital streams in both directions is obtained by the use of a line code of the binary type.

FIG. 1

EP 0 071 192 A1

*Patentanwalt*

*Dipl.-Ing. Anton Freiherr* *Riederer von Paar*

Frhr. Riederer v. Paar, Müllerstr. 31, D-8000 München 5

Müllerstraße 31
D-8000 München 5

☎ München (089) 26 60 60

Telex 523 903 claim d

✝ claims München

Konten:
Bayerische Vereinsbank München 563 390 (BLZ 700 202 70)
Gemeindesparkasse Gauting 624 072 (BLZ 700 560 90)
Postscheckkonto München 1921 39-809 (BLZ 700 100 80)

**0071192**

CSELT
Centro Studi e Laboratori
Telecomunicazioni S.p.A.
Via Guglielmo Reiss Romoli, 274
I- 10148 Turin, Italy

— 2 —

## SYSTEM FOR BASEBAND DIGITAL TRANSMISSION
## IN BOTH DIRECTIONS ON A TWO-WIRE LINE

### Description

The present invention relates to digital data and speech transmission on subscriber line and in particular it concerns a system for the baseband digital transmission in both directions on a two-wire line.

The introduction of new cheap integrated circuits for the PCM coding and decoding of data and speech signals has allowed the direct digital transmission from the subscriber's telephone set. Thanks to that both a higher quality of speech communication and greater number of facilities can be obtained through the telephone line, such as data transmission and so on. Such transmission can be carried out, as in the traditional systems operating with analog signals, by the simultaneous transmission of digital signals in both directions. The occupied band is maintained within acceptable values and the transmission line requires just two wires, therefore the already existing subscriber line can be used.

To cancel in the receiver the noise caused by the transmitter of the same set a hybrid transformer is usually utilized, so that the receiver is separated in a.c. current from the transmitter.

However, a complete cancellation of the signal generated by the transmitter at the input of the receiver of the same set is difficult to achieve, if the only hybrid transformer is used, both as a result of imperfect impedance matching between the line and the termination of the hybrid transformer and as a result of imperfections due to bridged taps, present along the transmission line.

In addition, distortions introduced by the transmission channel, i.e. by the subscriber line, whose transfer function is proportional to the square-root of the frequency, are to be taken into account.

These distortions prevent a correct reception of the transmitted symbols, unless a particularly protected line code or a line equalization is used, dependant on the line lenght.

The use of semi-fixed equalization networks is very expensive as it requires skilled personnel to effect preventive measurements. on the subscriber line, to operate the necessary adjustments on the networks first during its installation and then in case of line modifications.

Automatic equalization requires highly complex circuits, since the echo signal, whose level can be much higher than that of the useful signal, does not allow a correct estimate of the channel transfer function on which the necessary equalizer transfer function may be determined.

The presence of echo signals and of channel distorsions makes it difficult to obtain timing and synchronism information from the received data flow. In the case of synchronous transmission, such information is necessary to establish the instants the most suited to carry out the decisions on the transmitted symbols.

A possible solution consists of the use of line protocols for sending training sequences capable of supplying prior to the useful signal transmission all the necessary timing and synchronism information.

Yet an exchange of such sequences requires supervision apparatuses in both terminals and occupies time intervals which can no longer be used for data transmission.

It is therefore convenient to directly extract from the received signal, after the echo has been cancelled by a suitable process, the abovementioned information. As a rule, such process is based on more samplings of the signal formed by the useful signal and by the echo, within the signalling period. In fact, if a single sampling operation is carried out, the global channel ought to present a Nyquist characteristic, whose pulse response presents zero crossings with a phase relation well determined with respect to the sampling instants.

Said drawbacks are overcome and the technical problems are solved by the system for the baseband digital transmission in both directions on a two-wire line provided by the invention, which makes timing and synchronism information easy to obtain, even though it makes use of fixed channel equalization, and does not require training sequences at the beginning of each transmission.

It is a particular object of the present invention a system for baseband digital transmission in both directions on a two-wire line, wherein the transmission is effected by encoding the locally-generated digital signal by a binary line-code which maintains the statistical independence between the two digital streams with opposite directions present at the same time on the line and is designed such that the algebraic sum at the end of each word is equal to zero and the maximum value attained within the word itself does not exceed a predetermined value; wherein the reception is effected by sampling several times within the signalling period the received signal, duly amplitude and bandwidth controlled, by adding to the said received signal a correction signal, by detecting the signs of the obtained sum signal, duly band-
-limited, and by decoding in a way opposite to that effected at the transmitting end the stream of symbols correlated to said signs, the transitions of said sum signal, duly filtered at the fundamental frequency, being used to obtain the timing and synchronism signals by which samplings and sign detections are effected, wherein said correction signal is obtained by the analog-to-digital conversion of said sum signal and by multiplying it both by a coefficient, whose choice is dependent on the desired convergence precision and rate, and by a suitable number N of symbols transmitted by the local transmitter within the same period and those which immediately precede, the obtained products being added to the results of analogous operations effected in the preceding period, and then being orderly multiplied by said transmitted symbols, the new resultant products being finally added to each other and converted from digital to analog form, the final result being said correction signal.

Codes of the type mB-nB are commonly used in optical-fibre transmission systems. Within the invention, a particular code has been found, the 11B-14B, which occupies a limited frequency band and allows the statistical independence between the fluxes in opposite directions. The codes utilized in the prior art require a larger bandwidth and present more difficulties for the synchronism extraction (for example, WAL2).

These and other characteristics of the present invention will be made clearer by the following description of a preferred embodiment thereof, given by way of example and not in a limiting sense, and by the annexed drawing in which:

- Fig. 1 is a general block diagram of the apparatus used in the present system;
- Fig. 2 is a block diagram of the block denoted by CE in Fig. 1.

The operating principle of the apparatus, that within the transmission system effects the echo-cancellation, is basically similar to that of a digital transversal filter, whose coefficients represent the sampled estimate of the echo-channel pulse response. These coefficients are obtained by averaging the products of a certain number N of symbols generating the echo signal, by the received signal.

The mean is in turn obtained by weighting the products above by a coefficient D, on which the canceller precision and the convergence rate depend, and by adding the results to those previously-obtained.

The echo-cancelling signal is obtained from the addition of the products of the last N symbols transmitted with the coefficient estimates.

Said signal is then converted into analogic form and subtracted from the received signal, so as to recover the useful transmitted signal.

To obtain a low sensitivity to the distortions introduced by the channel, a code is used of the 11B-14B type by which 11-bit words are converted into 14-bit words, designed to obtain the statistical independence between the two digital streams present on the line and at the same time to minimize the digital sum inside each word. More particularly the algebraic bit sum is equal to zero at the word end and the maximum value attained does not exceed a convenient value, e.g. 4. Thus the d.c. component is null.

The statistical independence condition can be achieved by encoding just half the words and by obtaining the other half by negation of the first.

Thanks to the use of this code, we can employ a Nyquist receiving filter with an 80% roll-off and a fixed equalizer capable of ensuring the correct reception for distances up to 4 Km, on a conventional subscriber line having a $0.4 \cdot 10^{-3}$ m diameter.

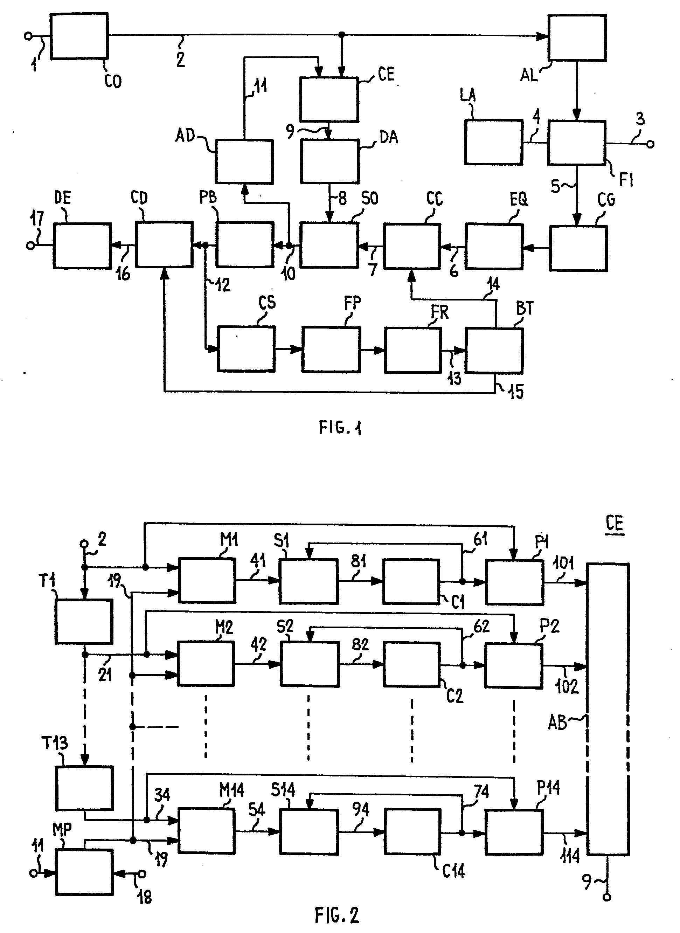

The apparatus provided by the invention is represented in Fig. 1.

The locally generated binary signal stream accesses via the wire denoted by 1 an encoder CO, apt to carry out the above 11B-14B enconding. According to this encoding, words formed of 11 binary symbols are associated with words of 14 symbols still binary, which afterwards are serially supplied at the output of encoder CO.

The encoded stream is sent through wire 2 to a line amplifier AL which raises its level such as to allow the transmission on the subscriber line denoted by 3, through a hybrid FI connected to the balancing network LA.

At the output of the hybrid connected to wire 5 there are present both the useful signal, coming from the remote terminal, and the echo noise caused by the hybrid unbalance and possible impedance mismatches along the subscriber line.

The amplitude of these signals is controlled by an automatic gain control circuit CG designed to operate on the basis of the peak value of the signals themselves.

The use of this circuit allows the complete exploitation of the dynamic range of analog-to-digital and digital-to-analog converters which will be mentioned hereinafter.

Circuit CG is followed by a passive network EQ, having the task of limiting the band of the received signal to 10/11 of the band occupied by the locally transmitted signal and, as previously mentioned, of equalizing in a fixed way a certain trunk of the suscriber line. A limited bandwidth is important in case afterwards a good disturbance cancellation is to be carried out by operating on the whole waveform.

The input of a sampling circuit CC, operating at a sampling frequency at least equal to twice the transmission frequency, is connected via wire 6 to the output of EQ.

The signal supplied by CC on wire 7 is added in an adder circuit SO to the signal supplied on wire 8 by a 12 - bit digital - to - analog converter DA, apt to operate on the correction signal arriving on wire 9 from an echo cancelling circuit CE. At the output of SO, on wire 10, a signal without echo noise is available and usable for the subsequent processings. More particularly, it is sent to a 6 - bit analog-to-digital converter AD, and then via wire 11, to the circuit CE. Besides, it is sent to a low - pass filter PB with cutoff frequency at least equal to the frequency of the signal sent on to the line by the local transmitter.

At the output of this filter, on wire 12, the whole analog waveform of the desired signal, in function of the samples present at the input, is recovered.

A pulse every zero - crossing is obtained from this waveform stream by a threshold comparator CS and a pulse generator FP. At the output of FP a pulse sequence with repetition frequency equal to that of the signal sent by the remote transmitter is obtained, which sequence is supplied to a band-pass filter FR, centered on the fundamental of the repetition frequency.

At the output of FR on wire 13 there is placed a generator BT, apt to generate the timing and synchronism signals starting from the repetition frequency of the received signals. As the timing signal is directly obtained from the transitions of the desired signal the sampling phase can be determined in a fixed way during the apparatus construction in function of the transmission rate.

BT can be advantageously realized by a phase locked - loop circuit equipped with a voltage - controlled crystal oscillator.

It generates both the sampling frequency signal used by the sampling circuit CC, at which it arrives via wire 14, and the signal used by a detecting circuit CD, at which it arrives through wire 15, which transfers at the output on wire 16 the sign of the analogic signal present at the input at the sampling instant.

Finally a decoder DE, connected to wire 16, effects the 14B - 11B conversion operation opposite to that of the encoder CO and supplies the useful signal on wire 17.

The echo canceller, denoted by CE in Fig. 1, is represented in greater detail in Fig. 2.

The binary signal present on wire 2 is sent to a delay line consisting of 13 cells T1, T2, ..., T13, each of them presenting a delay equal to the sampling period.

At the same time, the binary signal present on wire 11 is multiplied in MP by the already cited coefficient D, fixed during the apparatus making and available on the wire 18. By choosing for D a suitable value, in particular a submultiple of 2, the product can simply be obtained by a shifting from left to right of the digital signal within the word it is contained by.

The signal at the output of MP, on wire 19, is then multiplied in the 14 multipliers M1, M2, ..., M14 by each of the symbols present on wire 2 and at the outputs of the delay cells T1, T2, ..., T13, on wires 21, 22, ..., 34.

The obtained products, present on wires 41, 42, ..., 54, are added in the 14 adders S1, S2, ..., S14 to the results of the previous analogous operations, contained in the 12 - bit memory elements C1, C2, ..., C14 and present at their outputs on wires 61, 62, ..., 74. At the end of the adding operations, the memory elements C1, C2, ..., C14 contain the new updated sums, received from the outputs of the adders via wires 81, 82, ..., 94. Finally, in the 14 multipliers P1, P2, ..., P14 there is effected the multiplication of the symbols present both on wire 2 and at the outputs of delay cells T1, T2, ..., T13 by the sums at the outputs of the memory elements C1, C2, ..., C14. The products obtained at the outputs, connected to wires 101, 102, ..., 114, are added in an adder AB. On wire 9 there is then present a digital signal which, after the digital-to-analog conversion effected by DA (Fig. 1), is used as correction signal to purge the received signal of the echo signal.

Since the symbols supplied by T1, T2, ..., T14 are binary values, the multiplying operations are considerable simplified as they consist of mere logic AND operations.

In short, the apparatus effects a dynamic digital estimate of the echo signal, which depends on the link characteristics. Moreover, the convergency way depends remarkably on transmitted data sequence.

The above description has been given only by way of example and not in a limiting sense. Variations and modifications could be made while remaining within the scope of the invention.

1 Patent Claims

1. A system for baseband digital transmission in both directions on a two - wire line (3) <u>characterized in that</u> the transmission is effected by encoding the locally generated digital signal by a binary line - code which maintains the statistical independence between the two digital streams with opposite directions present at the same time on the line and is designed such that the algebraic sum at the end of each word is equal to zero and the maximum value attained within the word itself does not exceed a predetermined value; further characterized in that the reception is effected by sampling several times within the signalling period the received signal, duly amplitude and bandwidth controlled, by adding to the said received signal a correction signal, by detecting the signs of the obtained sum signal, duly band-limited, and by decoding in a way opposite to that effected at the transmitting end the stream of symbols correlated to said signs, the transitions of said sum signal, duly filtered at the fundamental frequency, being used to obtain the timing and synchronism signals by which samplings and sign detections are effected; characterized also in that said correction signal is obtained by the analog-to-digital conversion of said sum signal and by multiplying in both by a coefficient (D), whose choice is dependent on the desired convergence precision and rate, and by a suitable number N of symbols transmitted by the local transmitter within the same period and those which immediately precede, the obtained products being added to the results of analogous operations effected in the preceding period, and then being orderly multiplied by said transmitted symbols, the new resultant products being finally added to each other and converted from digital to analog form, the final result being said correction signal.

2. System according to claim 1 characterized in that said line code is of the 11B - 14B type and half the words are obtained by performing the operation of logic negation of the other half.

3. System according to claim 1 or 2, characterized in that said line is the subscriber line of a telecommunication network.

4. System according to any of claims 1 to 3, characterized in that the transmitting end comprises:

- an encoder (CO), apt to convert the locally generated signal into said line code;

- a line amplifier (AL), apt to amplify the encoded signals.

5. System according to any of claims 1 to 4, characterized in that the receiving end comprises:

- a circuit for the automatic gain control (CG), operating on the peak value of the received signal;

- a passive network (EQ), apt to limit the band of the received signal and to equalize the line in a fixed way;

- a sampling circuit (CC), controlled by a signal at a first frequency, connected to the output of that passive network;

- a first adder (SO), apt to add to the signal supplied by said sampling circuit said correction signal;

- a low-pass filter (PB), with a cut-off frequency equal at least to the frequency of the signal sent onto the line, connected to the output of said first adder;

- a detecting circuit (CD), apt to detect at instants scanned by a signal at a second frequency, the algebraic sign of the signal at the output of said low-pass filter;

- a decoder (DE), apt to convert the sequence of algebraic signs supplied by said detecting circuit into the signal generated by the remote transmitter, effecting a decoding operation inverse to the one used to obtain that line code.

6. System according to claim 5, characterized in that said signals at a first and second frequency are obtained by a circuit comprising:

- a threshold comparator (CS), apt to detect the zero-crossings of the signal at the output of said low-pass filter (PB);

- a pulse generator (FP), connected to the output of said threshold comparator;

- a bandpass filter (FR), tuned on the fundamental repetition frequency of the pulses supplied by said pulse generator;

- a generator (BT), apt to generate the signals at said first and second frequency by utilizing the signals supplied by said bandpass filter.

7.  System according to claim 6, characterized in that said generator (BT) is a phase loop circuit with a voltage-controlled crystal oscillator.

8.  System according to any of claims 1 to 7, characterized in that said correction signal is obtained by a circuit (CE) comprising:

- a delay line, consisting of N-1 equal delay cells (T1, T2, ....), which receives at its input the locally generated signal after being coded;

- an analog-to-digital converter (AD) which receives at its input said sum signal;

- a first multiplier (MP) which receives at its inputs both the digi tal signal supplied by said analog-to-digital converter, and said coefficient;

- N second multipliers (M1, M2, ...), each of them effecting the multiplication of the encoded signal or of the signal at the output of each of said N-1 delay cells by the signal supplied by said first multiplier;

- N second adders (S1, S2, ...) each of them effecting the addition of the signal at the output of one of said second multipliers with the signal at the output of the associated one of the N memory cells (C1, C2, ...);

- N memory cells (C1,C2,...), each of them receiving at the writing input the signal supplied by the associated one of said second adders;

- N third multipliers (P1,P2,...), each of them effecting the multiplication of the signal at the reading output of each of said memory cells by the coded signal or by the signal at the output of each of said delay cells;

- a third adder (AB), apt to add with each other all the signals present at the outputs of said N third multipliers;

- a digital-to-analog converter (DA), which receives at its in-input the signal supplied by said third adder and supplies at the output said correction signal.

9. System according to claim 8, characterized in that said first multiplier (MP) is a circuit apt to effect a number of shifts within the binary word supplied by said analog-to-digital converter (AD) equal to the value of said coefficient.

FIG. 1

FIG. 2

**0071192**

## EUROPEAN SEARCH REPORT

Application number

EP  82 10 6619

| DOCUMENTS CONSIDERED TO BE RELEVANT | | | |
|---|---|---|---|
| Category | Citation of document with indication. where appropriate, of relevant passages | Relevant to claim | CLASSIFICATION OF THE APPLICATION (Int. Cl. ³) |
| Y | SECOND INTERNATIONAL CONFERENCE ON TELECOMMUNICATION TRANSMISSION- INTO THE DIGITAL ERA, 17th-20th March 1981, pages 197-200, London (GB); M.G.VRY et al.: "Digital signal transmission to the subscriber using A 1 + 1 system". *Page 197, left-hand column, lines 35-43, right-hand column, last paragraph; page 198, left-hand column, lines 29-36; line 53 to right-hand column, line 53* | 1 | H 04 L    5/14<br>H 04 B    3/23 |
| A | SECOND INTERNATIONAL CONFERENCE ON TELECOMMUNICATION TRANSMISSION- INTO THE DIGITAL ERA. | 3-5,7 | |
| Y | GB-A-2 041 702   (STANDARD TELEPHONES) *Page 1, lines 26-46; figure 1* | 1 | **TECHNICAL FIELDS SEARCHED (Int. Cl. ³)**<br><br>H 04 B    3/23<br>H 04 L   25/49<br>H 04 L    5/14 |
| A | | 2 | |

--- -/-

The present search report has been drawn up for all claims

| Place of search | Date of completion of the search | Examiner |
|---|---|---|
| THE HAGUE | 03-11-1982 | HOLPER G.E.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503. 03.82

European Patent
Office

| DOCUMENTS CONSIDERED TO BE RELEVANT | | | Page 2 |
|---|---|---|---|
| Category | Citation of document with indication. where appropriate, of relevant passages | Relevant to claim | CLASSIFICATION OF THE APPLICATION (Int. Cl. ³) |
| Y | IEEE TRANSACTIONS ON ACOUSTICS, SPEECH AND SIGNAL PROCESSING, vol. ASSP-27, no. 6, December 1979, pages 768-781, New York (USA); N.A.M.VERHOECKX et al.: "Digital echo cancellation for baseband data transmission". *Page 770, right-hand column, lines 11-18; page 771, left-hand column, lines 13-18; page 772, right-hand column, lines 31-41; figures 4(b),5(c)* | 1 | |
| A | IEEE TRANSACTIONS ON ACOUSTICS, SPEECH AND SIGNAL PROCESSING.<br><br>--- | 8 | |
| A | US-A-4 131 767 (WEINSTEIN) *Column 2, line 63 to column 3, line 10*<br><br>--- | 1 | TECHNICAL FIELDS SEARCHED (Int. Cl. ³) |
| A | ELECTRONICS LETTERS, vol. 12, no. 18, September 1976, pages 478-479, London (GB); M.ROUSSEAU: "Block codes for optical-fibre communication". *Table 3*<br><br>----- | 1,2 | |

| The present search report has been drawn up for all claims | | |
|---|---|---|
| Place of search<br>THE HAGUE | Date of completion of the search<br>03-11-1982 | Examiner<br>HOLPER G.E.E. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
    document

EPO Form 1503 03.82